# EUROPÄISCHE PATENTSCHRIFT

(11) **EP 4 226 065 B1**
(45) Veröffentlichungstag und Bekanntmachung des Hinweises auf die Patenterteilung: **22.04.2026**
(21) Anmeldenummer: 21786402.4
(22) Anmeldetag: 29.09.2021
(51) Int. Cl.: F16H 63/34, F16H 61/00, F16H 61/12

(54) **PARKSPERRENEINRICHTUNG FÜR EIN FAHRZEUG UND VERFAHREN ZUM BETREIBEN EINER PARKSPERRENEINRICHTUNG IN EINEM FAHRZEUG**
PARKING LOCK DEVICE FOR A VEHICLE AND METHOD FOR OPERATING A PARKING LOCK DEVICE IN A VEHICLE
ENSEMBLE FREIN DE STATIONNEMENT CONÇU POUR UN VÉHICULE ET PROCÉDÉ POUR FAIRE FONCTIONNER UN ENSEMBLE FREIN DE STATIONNEMENT DANS UN VÉHICULE

(30) Priorität: 06.10.2020 DE 102020212578
(43) Veröffentlichungstag der Anmeldung: 16.08.2023
(73) Patentinhaber: Robert Bosch GmbH, 70442 Stuttgart (DE)
(72) Erfinder: TAPIA, Francisco, 70374 Stuttgart (DE); WETZEL, Gerhard, 70825 Korntal-Muenchingen (DE); SCHUELLER, Michael, 71292 Friolzheim (DE); SIEVERT, Holger, 71634 Ludwigsburg (DE)
(86) Internationale Anmeldenummer: PCT/EP2021/076858
(87) Internationale Veröffentlichungsnummer: WO 2022/073829

(56) Entgegenhaltungen:
- WO-A1-2019/001831
- WO-A1-2019/001831
- WO-A1-2019/001831
- DE-A1- 102008 001 976
- DE-A1- 102008 001 976
- DE-A1- 102008 001 976
- DE-A1- 102012 024 507
- DE-A1- 102012 024 507
- DE-A1- 102014 211 390
- DE-A1- 102014 211 390
- DE-A1- 102014 211 390
- DE-A1- 102017 223 588
- DE-A1- 102017 223 588
- DE-A1- 102018 008 938
- DE-A1- 102018 008 938
- DE-T5- 112017 003 661
- DE-T5- 112017 003 661

## Beschreibung

Die vorliegende Erfindung betrifft eine Parksperreneinrichtung für ein Fahrzeug und ein Verfahren zum Betreiben einer Parksperreneinrichtung in einem Fahrzeug.

### Stand der Technik

Übliche Parksperren können bei einer elektrischen Antriebsvorrichtung, etwa bei einer elektrischen Achse, eingesetzt werden und vorteilhaft eine Sperrwirkung für eine Fahr- oder Rollbewegung des Fahrzeugs erzeugen und dieses vorteilhaft daran hindern unabsichtlich wegzurollen, oder zumindest die Wahrscheinlichkeit dafür verringern.

Ein Parksperrenrad kann mit einer Antriebswelle fest verbunden sein und läuft auf dieser mit sobald sich die elektrische Maschine einer E-Achse dreht. Bei Auslösung der Parksperre geht vom Aktuator eine Drehbewegung aus, die über einen Schaltmechanismus die Sperrklinke in das Parksperrenrad drückt. Durch das Einrücken der Klinke in das Parksperrenrad kann über den Formschluss die Antriebswelle ruckartig gestoppt werden. Dies bedeutet, dass der E-Motor der E-Achse in Millisekunden zum Stoppen kommen kann. Dabei kann ein sehr großes Drehmoment auftreten. Es ist dabei wünschenswert, das ruckartige Stoppen und das damit verbundene große Drehmoment abzumildern, und zu dämpfen, insbesondere bei zu hohen Geschwindigkeiten des Fahrzeugs.

Beim Auslösen der Parksperre kann dabei die komplette E-Achse in Sekundenbruchteilen stoppen und ein enormes Drehmoment wirkt dann schlagartig auf die Antriebswelle, Getriebewelle und deren Lager, das Parksperrenrad, die Klinke sowie das Gehäuse. Daher können diese Bauteile sowie die Kugellager und das Gehäuse sehr massiv ausgeführt werden.

In bekannten Parksperrensystemen kann die mechanische oder hydraulische Struktur derart gestaltet sein, dass unter bestimmten Betriebsbedingungen wieder ein Grundzustand angenommen werden kann, in welchem ein Parkzustand mit einer Sperrwirkung aktiv sein kann (default-to-park). Dabei kann üblicherweise ein Fahrzeug einen Parkzustand annehmen, auch wenn ein Betriebsfehler auftritt.

Die WO 2015/128083 A1 beschreibt ein Verfahren zur Betätigung einer Bremseinrichtung eines ein Automatikgetriebe aufweisenden Antriebsstranges eines Fahrzeugs, mit einer getriebeseitigen Parksperre, mit einer Betriebsbremse, und mit einer unabhängig von der Betriebsbremse betätigbaren Feststellbremse.

Aus der DE 10 2008 001 976 A1 ist eine Parksperreneinrichtung für ein Fahrzeug bekannt, mit einer Sperrklinke und einem Parksperrenraden mit zumindest einer Vertiefung, in welche die Sperrklinke einrastbar ist und dabei die Sperrwirkung erzeugbar ist. Die Parksperreneinrichtung weist eine Aktuatoreinrichtung auf, mit welcher die Sperrklinke aktuierbar ist und in die Vertiefung hinein und/oder aus dieser heraus bewegbar ist. Die Parksperreneinrichtung weist eine elektromechanische Hilfsaktuatoreinrichtung auf, mit welcher die Sperrklinke aktuierbar ist und in die Vertiefung hinein bewegbar ist. Weiterhin ist eine Steuereinrichtung vorgesehen, mit welcher ein Aktuieren der Sperrklinke mit der Aktuatoreinrichtung steuerbar ist und mit welcher ein Aktuieren der Sperrklinke mit der elektromechanischen Hilfsaktuatoreinrichtung im Falle eines Betriebsfehlers in einer Stromversorgung des Fahrzeugs oder eines Bordnetzes des Fahrzeugs steuerbar ist. Mit einer Hilfsstromquelle ist die elektromechanische Hilfsaktuatoreinrichtung im Falle des Betriebsfehlers in der Stromversorgung des Fahrzeugs oder des Bordnetzes des Fahrzeugs betreibbar.

Ähnliche Parksperreneinrichtungen sind aus der WO 2019/001831 A1 und aus der DE 10 2014 211390 A1 bekannt.

### Offenbarung der Erfindung

Die vorliegende Erfindung schafft eine Parksperreneinrichtung für ein Fahrzeug nach Anspruch 1 und ein Verfahren zum Betreiben einer Parksperreneinrichtung in einem Fahrzeug nach Anspruch 8. Bevorzugte Weiterbildungen sind Gegenstand der Unteransprüche.

### Vorteile der Erfindung

Die der vorliegenden Erfindung zugrunde liegende Idee besteht darin, eine Parksperreneinrichtung für ein Fahrzeug sowie ein Verfahren zum Betreiben einer Parksperreneinrichtung in einem Fahrzeug anzugeben, wobei ein Einlegen des Sperrmoments auf die Komponenten der Parksperreneinrichtung mit einer elektromechanischen Hilfsaktuatoreinrichtung erfolgen kann, wodurch eine redundante Möglichkeit zum Einlegen der Sperrwirkung bei einem Betriebsfehler in der Stromversorgung im Fahrzeug gegeben ist.

Erfindungsgemäß umfasst die Parksperreneinrichtung für ein Fahrzeug eine Sperrklinke ein Parksperrenrad mit zumindest einer Vertiefung, in welche die Sperrklinke einrastbar ist und dabei die Sperrwirkung erzeugbar ist; eine Aktuatoreinrichtung, mit welcher die Sperrklinke aktuierbar ist und in die Vertiefung hinein und/oder aus dieser heraus bewegbar ist; eine Steuereinrichtung, mit welcher ein Aktuieren der Sperrklinke mit der Aktuatoreinrichtung steuerbar ist; eine elektromechanische Hilfsaktuatoreinrichtung, mit welcher entweder die Sperrklinke aktuierbar ist und in die Vertiefung hinein und/oder aus dieser heraus bewegbar ist, wobei mit der Steuereinrichtung ein Aktuieren der Sperrklinke mit der elektromechanischen Hilfsaktuatoreinrichtung im Falle eines Betriebsfehlers in einer Stromversorgung des Fahrzeugs oder eines Bordnetzes des Fahrzeugs steuerbar ist; oder eine Hilfssperrklinke aktuierbar ist und in die Vertiefung hinein und/oder aus dieser heraus bewegbar ist, wobei mit der Steuereinrichtung ein Aktuieren der Hilfssperrklinke mit der elektromechanischen Hilfsaktuatoreinrichtung im Falle eines Betriebsfehlers in einer Stromversorgung des Fahrzeugs oder eines Bordnetzes des Fahrzeugs steuerbar ist; und eine Hilfsstromquelle mit welcher die elektromechanische Hilfsaktuatoreinrichtung im Falle des Betriebsfehlers in der Stromversorgung des Fahrzeugs oder des Bordnetzes des Fahrzeugs betreibbar ist, wobei die Parksperreneinrichtung so konfiguriert ist, dass über einer vorbestimmten Geschwindigkeit des Fahrzeugs die elektromechanische Hilfsaktuatoreinrichtung über eine Rekuperation aus einer elektrischen Maschine des Fahrzeugs betreibbar ist und unterhalb der vorbestimmten Geschwindigkeit die elektromechanische Hilfsaktuatoreinrichtung über die Hilfsstromquelle betreibbar ist.

Die Hilfsaktuatoreinrichtung kann als ein redundantes System zum Einlegen einer Sperrwirkung an dem Parksperrenrad funktionieren. Die Hilfsaktuatoreinrichtung kann mit anderen Worten einen Sekundäraktuator zum Einlegen einer Hilfssperrklinke an dem Parksperrenrad oder an einer Mechanik zum Einlegen der Sperrklinke darstellen um im Falle eines Betriebsfehlers dennoch in der Lage zu sein, eine Sperrwirkung an dem Parksperrenrad auszulösen oder zu halten. Dazu kann im Falle eines Betriebsfehlers in der Stromversorgung des Fahrzeugs die Hilfsaktuatoreinrichtung dennoch funktionsfähig sein, da diese vorteilhaft über die Hilfsstromquelle betrieben wird, wobei die Hilfsstromquelle selbst eine redundante Stromquelle im Fahrzeug darstellen kann. Die Hilfsaktuatoreinrichtung kann vorteilhaft dazu ausgelegt sein, einen geringeren Stromverbrauch aufzuweisen als die Aktuatoreinrichtung, welche den Primäraktor zum Einlegen der Sperrwirkung darstellt. Die Hilfsaktuatoreinrichtung kann über eine Feder vorgespannt sein, etwa mit einem Stift ausgeführt sein, und daher einen geringeren Energie- und Stromverbrauch aufweisen als die Aktuatoreinrichtung selbst. Die Hilfsaktuatoreinrichtung kann zusätzlich eine Spule umfassen, mit welcher der Stift, also die Hilfssperrklinke, entgegen der Kraftwirkung einer Feder gehalten oder bewegt werden kann, also vorteilhaft aus einer Sperrposition an dem Parksperrenrad hinaus. Die Hilfsaktuatoreinrichtung kann auch den Stift, also die Hilfssperrklinke umfassen. Da die Hilfssperrklinke eine geringere Dimension aufweisen kann als die (primäre) Sperrklinke, kann die Spule für die Hilfssperrklinke ebenso geringer dimensioniert sein. Um die Hilfssperrklinke über die Spule aus der Sperrposition heraus zu bewegen oder außerhalb dieser zu halten, kann daher zur entsprechenden Bestromung der Spule der Hilfsaktuatoreinrichtung ein geringerer Strom genutzt werden als für die (primäre) Aktuatoreinrichtung, wodurch die Hilfsaktuatoreinrichtung vorteilhaft einfach von der Hilfsstromquelle betreibbar ist und die Hilfsstromquelle eine geringere Dimensionierung aufweisen kann als die Stromquelle für die (primäre) Aktuatoreinrichtung.

Die Parksperreneinrichtung kann in einer elektrischen Antriebsachse eingesetzt werden um ein Elektroauto daran zu hindern unabsichtlich wegzurollen, oder zumindest die Gefahr dazu zu verringern.

Es kann die erwähnte erfindungsgemäße Steuerung der Parksperreneinrichtung vorteilhaft während und/oder nach einem Betriebsfehler in der Stromversorgung des Bordnetzes (12V-Netz) des Fahrzeugs, der Steuereinrichtung oder anderer Fahrzeugkomponenten erfolgen. Es kann dabei vorteilhaft ein Einlegen der Sperrwirkung unabhängig davon erfolgen, ob vor dem Eintreten des Betriebsfehlers die Sperrwirkung bereits aktiv war oder nicht und dann als neuer Ausgangszustand gesetzt werden.

Ein Parkzustand mit einer Sperrwirkung kann durch eine Feder aktiviert werden, welche die Parksperreneinrichtung umfassen kann, wenn diese Feder die Sperrklinke spannen kann. Dabei kann die Feder vorgespannt sein und die Sperrklinke in die Vertiefung einrasten, wenn keine ausreichende Gegenkraft gegen das Einrasten auf die Sperrklinke mehr wirkt. Eine derartige Gegenkraft kann von einem hydraulischen Kolben ausgelöst werden, welchen die Parksperreneinrichtung umfassen kann und welcher die Bewegung der Sperrklinke steuern kann, und mit der Sperrklinke über ein Gestänge mechanisch verbunden sein kann, welches die Parksperreneinrichtung umfassen kann. Eine Spule kann den Kolben in einer Position halten, in welcher die Sperrklinke nicht eingerastet ist. Während eines Fahrmodus kann die Spule ständig bestromt sein um eine Position des Kolbens zu bedingen, welche die Sperrklinke vor dem Einrasten (gegen die Wirkung der vorgespannten Feder) bewahrt. Durch einen hydraulischen Druck auf den Kolben aus einem hydraulischen System, welches die Parksperreneinrichtung umfassen kann, kann dieser zusätzlich gegen die Spannwirkung der Feder in einer Position gehalten werden, unter welcher die Sperrklinke nicht einrastet. Auf diese Weise können zumindest zwei Prinzipien erhalten werden, welche auf redundante Weise dem Einlegen der Sperrwirkung entgegenwirken können. So ein System mit den jeweiligen Komponenten kann von der Parksperreneinrichtung umfasst sein.

Im Falle eines Betriebsfehlers kann im üblichen Fall einerseits eine zumindest teilweise Verringerung des hydraulischen Drucks auftreten.

Andererseits kann ein Betriebsfehler in der Stromversorgung des Bordnetzes (12V-Netz), der Steuereinrichtung oder anderer Fahrzeugkomponenten auftreten. Dabei kann dann die Spule den Kolben loslassen. Wenn das Fahrzeug stoppt und die Drehung des Getriebes/Schaltung stoppt dann kann sich eine mechanisch gesteuerte Ölpumpe ausschalten und der hydraulische Druck verringert sich. Der Kolben kann dann in die Position der Parkwirkung (Sperrwirkung) als sogenanntes default-to-park geschoben werden.

Im Falle einer vorhandenen elektrischen Antriebswelle, wobei ein hydraulischer Druck nicht ständig vorhanden ist, kann ein elektromechanisches System vorhanden sein um eine Sperrwirkung als Grundzustand zu erreichen (default-to-park), wenn ein Betriebsfehler in der Stromversorgung auftritt.

Die Spule kann bestromt werden und ein Druck kann zu dem Kolben geleitet werden, welcher die Sperrposition der Sperrklinke zu einer nicht-sperrenden Position hin verschieben kann. Des Weiteren kann die Spule bestromt bleiben und den Kolben mechanisch halten.

Diese Spule kann dann bestromt bleiben und das Getriebe/Schaltung außerhalb einer Parkstellung halten.

Diese Aktion ist notwendig, da der Flüssigkeitsdruck in einem hydraulischen System fällt wenn die Pumpe bei einer ausgeschalteten Maschine nicht arbeitet.

Das Einlegen der Sperrwirkung kann unter einem erkannten und vorliegenden Betriebsfehler und im Rahmen der Geschwindigkeit/Betriebsparameter nach einer Vorgabe, etwa von Werten für die Betriebsparameter und/oder Geschwindigkeit, erfolgen.

Um den Parkzustand als einen Grundzustand mit einer vorliegenden Sperrwirkung zu erzielen kann die Sperrklinke auch bei einem Betriebsfehler einlegbar sein, vorteilhaft unterhalb einer vorbestimmten Geschwindigkeit des Fahrzeugs oder innerhalb eines vorbestimmten Betriebsmodus des Fahrbetriebs, etwa gemessen an den Motordrehzahlen, der Motorleistung, der Geschwindigkeit oder ähnlichen Betriebsparametern.

Gemäß einer bevorzugten Ausführungsform der Parksperreneinrichtung ist das Parksperrenrad mit einer Antriebswelle eines Motors des Fahrzeugs verbunden.

Gemäß einer bevorzugten Ausführungsform der Parksperreneinrichtung umfasst der Motor eine elektrische Maschine mit einem Rotor und die Antriebswelle ist mit dem Rotor verbunden.

Durch die Verbindung mit dem Rotor kann die Sperrwirkung direkt auf die Bewegung und das Drehmoment des Rotors übertragen werden und die Bewegung des Rotors gestoppt werden.

Wenn die elektromechanische Hilfsaktuatoreinrichtung bei einem geringeren Energieverbrauch betreibbar als die Aktuatoreinrichtung, kann
vorteilhaft eine Hilfsstromquelle geringer dimensioniert werden als die Hauptstromquelle, wodurch Kosten und Bauraum gespart werden können.

Bei der erfindungsgemäßen Parksperreneinrichtung ist über einer vorbestimmten Geschwindigkeit des Fahrzeugs die elektromechanische Hilfsaktuatoreinrichtung über eine Rekuperation aus einer elektrischen Maschine des Fahrzeugs betreibbar und unterhalb der vorbestimmten Geschwindigkeit die elektromechanische Hilfsaktuatoreinrichtung über die Hilfsstromquelle betreibbar

Über der vorbestimmten Geschwindigkeit kann das Einlegen der Sperrwirkung solange ausgesetzt sein, bis das Fahrzeug derart verzögert wurde, dass die Geschwindigkeit des Fahrzeugs bis oder unter einen bestimmten Grenzwert für die Geschwindigkeit verzögert wird. Das Fahrzeug kann eine Wandlereinrichtung für die Spannung umfassen und die Aktuatoreinrichtung und/oder die Hilfsaktuatoreinrichtung entsprechend dem üblichen 12V-Netz (Bordnetz) betreiben, indem bei einem Betriebsfehler die anderen nutzbaren Stromquellen und deren Strom oder Spannung, etwa die Rekuperation oder die Hilfsstromquelle durch die Wandlereinrichtung auf die Aktuatoreinrichtung und/oder die Hilfsaktuatoreinrichtung hochgeregelt oder heruntergeregelt werden können.

Gemäß einer bevorzugten Ausführungsform der Parksperreneinrichtung ist über einer vorbestimmten Geschwindigkeit des Fahrzeugs die elektromechanische Hilfsaktuatoreinrichtung über eine Rekuperation aus einer elektrischen Maschine des Fahrzeugs betreibbar und dabei eine Sperrwirkung erst dann einlegbar, wenn die Geschwindigkeit des Fahrzeugs unterhalb einer vorbestimmten Grenzgeschwindigkeit fällt und dabei eine Betriebsspannung der Hilfsstromquelle unterhalb einer vorbestimmten Grenzspannung regelbar ist.

Unterhalb der vorbestimmten Geschwindigkeit des Fahrzeugs oder im Stillstand, kann ein Energiefluss zur Hilfsaktuatoreinrichtung von der Hilfsstromquelle erfolgen, etwa von einer Kondensator, welcher über eine übliche Stromquelle, etwa eine Hochvoltbatterie, aufladbar ist, wenn kein Betriebsfehler besteht. Oberhalb der vorbestimmten Geschwindigkeit des Fahrzeugs kann eine kinetische Energie über den Inverter und die elektrische Maschine genutzt werden, etwa aus Rekuperation.

Es kann dabei möglich sein, dass eine Hochvoltbatterie des Fahrzeugs für einen elektrischen Antrieb nicht nutzbar ist, wenn ein Betriebsfehler vorliegt, wobei eine Verbindung zur Hochvoltbatterie dann unterbrochen werden kann.

Nach einigen Sekunden nach dem Auftreten eines Betriebsfehlers am 12V-Bordnetz kann eine aktive Entladung erfolgen, etwa des Kondensators, um eine vorbestimmte Grenzspannung am Kondensator oder in einer Zuleitung zur Steuereinrichtung und/oder zur Hilfsaktuatoreinrichtung unterhalb von beispielsweise 60 V zu halten.

Gemäß einer bevorzugten Ausführungsform der Parksperreneinrichtung ist die Steuereinrichtung dazu eingerichtet, einen Betriebsfehler einer Fahrzeugsteuerung und/oder einer Stromversorgung des Fahrzeugs zu ermitteln und die Aktuatoreinrichtung auch bei vorliegendem Betriebsfehler zu steuern. Gemäß einer bevorzugten Ausführungsform der Parksperreneinrichtung umfasst die Hilfsstromquelle einen Kondensator, und die Steuereinrichtung ist dazu eingerichtet, eine Entladung des Kondensators unterhalb der vorbestimmten Grenzspannung zu erzwingen.

Gemäß einer bevorzugten Ausführungsform der Parksperreneinrichtung umfasst die Hilfsstromquelle einen Kondensator.

Gemäß einer bevorzugten Ausführungsform der Parksperreneinrichtung umfasst die Hilfssperrklinke einen federspannbaren Stiftmechanismus mit einer Spule, mit welcher ein Sperrstift in einer offenen Position haltbar ist und mit einer Feder in eine Sperrposition drückbar ist, vorteilhaft bei einer ausreichend geringen Bestromung von der Spule.

In der offenen Position ist vorteilhaft keine Sperrwirkung aktiv.

Gemäß einer bevorzugten Ausführungsform der Parksperreneinrichtung umfasst diese eine manuelle Sperrlösevorrichtung, mittels welcher die Sperrklinke oder die Hilfssperrklinke manuell aus der Vertiefung herausbewegbar ist.

. Mit der manuellen Sperrlösevorrichtung kann ein Nutzer manuell die Sperrwirkung aufheben.

Erfindungsgemäß erfolgt bei dem Verfahren zum Betreiben einer Parksperreneinrichtung in einem Fahrzeug ein Bereitstellen einer erfindungsgemäßen Parksperreneinrichtung in dem Fahrzeug, ein Erkennen eines Betriebsfehlers in einer Stromversorgung des Fahrzeugs oder eines Bordnetzes des Fahrzeugs;
ein Einlegen der Sperrwirkung an der Hilfssperrklinke oder an der Sperrklinke mit der elektromechanischen Hilfsaktuatoreinrichtung, wobei die elektromechanischen Hilfsaktuatoreinrichtung mit einer Hilfsstromquelle im Falle des Betriebsfehlers betrieben wird,
wobei über einer vorbestimmten Geschwindigkeit des Fahrzeugs die elektromechanische Hilfsaktuatoreinrichtung über eine Rekuperation aus einer elektromechanischen Maschine des Fahrzeugs betrieben wird und unterhalb der vorbestimmten Geschwindigkeit die elektromechanische Hilfsaktuatoreinrichtung über die Hifsstromquelle betrieben wird.

Die Parksperreneinrichtung kann sich auch durch die in Verbindung mit dem Verfahren genannten Merkmale und dessen Vorteile auszeichnen und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

Es zeigen:
- Fig. 1: eine schematische Darstellung einer Parksperreneinrichtung gemäß einem Ausführungsbeispiel der vorliegenden Erfindung;
- Fig. 2: eine schematische Darstellung der Energieversorgung der Parksperreneinrichtung gemäß einem Ausführungsbeispiel der vorliegenden Erfindung;
- Fig. 3a: ein Zeitdiagramm für einen Betriebsmodus der Parksperreneinrichtung;
- Fig. 3b: ein Zeitdiagramm für einen weiteren Betriebsmodus der Parksperreneinrichtung;
- Fig. 4a: ein Schaltdiagramm zum Betreiben der Parksperreneinrichtung in einem Betriebsmodus gemäß einem Ausführungsbeispiel der vorliegenden Erfindung;
- Fig. 4b: ein Schaltdiagramm zum Betreiben der Parksperreneinrichtung in einem Betriebsmodus gemäß einem weiteren Ausführungsbeispiel der vorliegenden Erfindung;
- Fig. 5: eine Darstellung eines Spannungsverlaufs bei einem Betrieb einer Hilfsstromquelle in einer Parksperreneinrichtung gemäß einem Ausführungsbeispiel der vorliegenden Erfindung;
- Fig. 6: eine Darstellung einer Hilfssperrklinke in einer Parksperreneinrichtung gemäß einem Ausführungsbeispiel der vorliegenden Erfindung;
- Fig. 7: eine Darstellung einer manuelle Sperrlösevorrichtung in einer Parksperreneinrichtung gemäß einem Ausführungsbeispiel der vorliegenden Erfindung; und
- Fig. 8: eine Blockdarstellung von Verfahrensschritten des Verfahrens zum Betreiben einer Parksperreneinrichtung gemäß einem Ausführungsbeispiel der vorliegenden Erfindung.

In den Figuren bezeichnen gleiche Bezugszeichen gleiche bzw. funktionsgleiche Elemente.

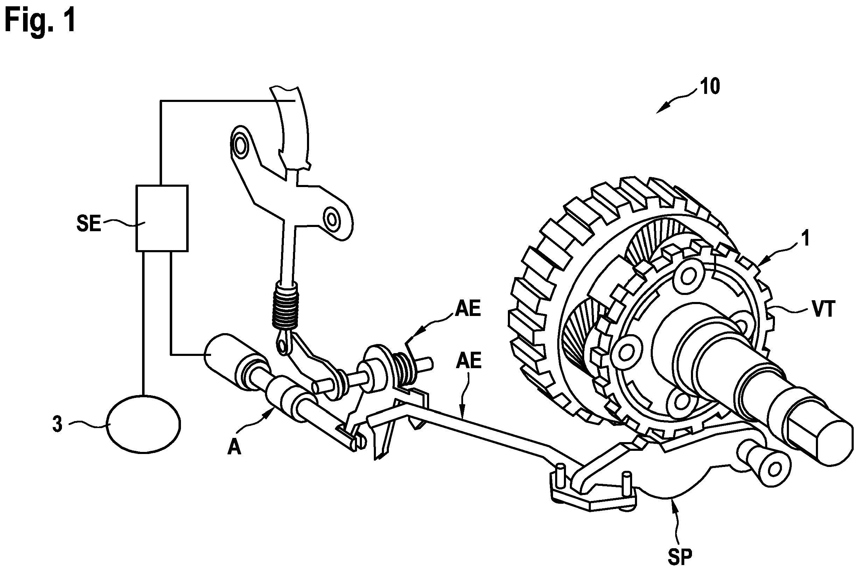

Fig. 1 zeigt eine schematische Darstellung einer Parksperreneinrichtung gemäß einem Ausführungsbeispiel der vorliegenden Erfindung.

Eine Parksperreneinrichtung 10 kann eine Sperrklinke SP umfassen; ein Parksperrenrad 1 mit zumindest einer Vertiefung VT umfassen, in welche die Sperrklinke SP einrastbar ist und dabei die Sperrwirkung erzeugbar ist; eine Aktuatoreinrichtung AE umfassen, etwa einen Kolben A mit einer Spule (etwa auch ein hydraulisches System), mit welcher die Sperrklinke SP aktuierbar ist und in die Vertiefung VT hinein und/oder aus dieser heraus bewegbar ist; eine Steuereinrichtung SE umfassen, mit welcher ein Aktuieren der Sperrklinke SP in Abhängigkeit von der Geschwindigkeit des Fahrzeugs in eine bestimmte Richtung steuerbar ist, wobei die Geschwindigkeit aus einer Beschleunigung des Fahrzeugs ermittelbar ist und die Sperrklinke SP erst einrastbar ist, wenn die Geschwindigkeit und/oder die Beschleunigung geringer ist als ein vorbestimmter Grenzwert, und wobei ein Wert der Beschleunigung durch die Steuereinrichtung SE von einer Beschleunigungssensoreinrichtung empfangbar ist; und eine Hilfsstromquelle 3 umfassen, mit welcher die Steuereinrichtung SE und die Aktuatoreinrichtung AE betreibbar sind.

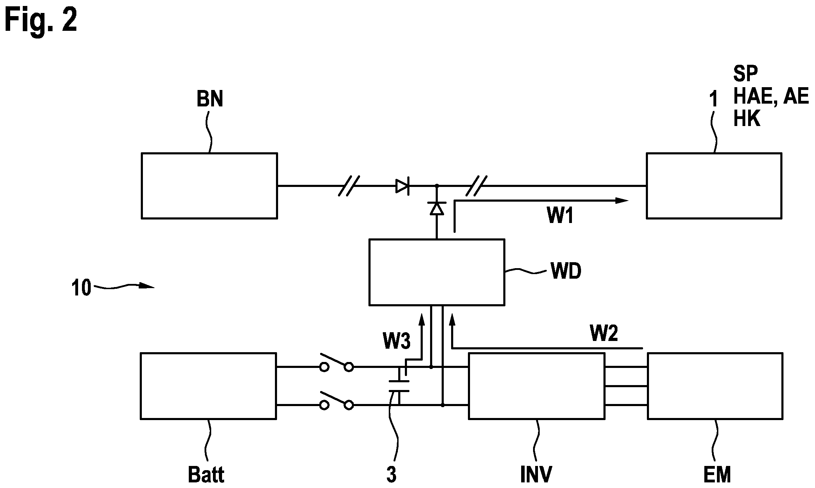

Fig. 2 zeigt eine schematische Darstellung der Energieversorgung der Parksperreneinrichtung gemäß einem Ausführungsbeispiel der vorliegenden Erfindung.

In einer Parksperreneinrichtung 10 für ein Fahrzeug, ist eine Sperrklinke SP; ein Parksperrenrad 1; eine Aktuatoreinrichtung AE, mit welcher die Sperrklinke SP aktuierbar ist; eine elektromechanische Hilfsaktuatoreinrichtung HAE, mit welcher die Sperrklinke SP und/oder eine Hilfssperrklinke HK aktuierbar ist, und eine Steuereinrichtung vorhanden, mit welcher ein Aktuieren der Sperrklinke SP mit der Aktuatoreinrichtung AE steuerbar ist und mit welcher ein Aktuieren der Sperrklinke SP und/oder der Hilfssperrklinke HK mit der elektromechanischen Hilfsaktuatoreinrichtung HAE im Falle eines Betriebsfehlers in einer Stromversorgung des Fahrzeugs oder eines Bordnetzes des Fahrzeugs steuerbar ist. Des Weiteren ist eine Hilfsstromquelle 3 vorhanden, mit welcher die elektromechanische Hilfsaktuatoreinrichtung HAE im Falle des Betriebsfehlers in der Stromversorgung des Fahrzeugs oder des Bordnetzes des Fahrzeugs betreibbar ist. Das Fahrzeug kann eine elektrische Antriebsvorrichtung mit einer elektrischen Maschine EM, mit einer Batterie Batt zum Versorgen der elektrischen Maschine, und einen Inverter INV zum Betreiben der elektrischen Maschine umfassen. Die Sperrklinke SP kann über einen Wandler WD mit dem Strom der Batterie Batt oder über die elektrischen Maschine EM versorgt und betrieben werden. Die Hilfsstromquelle 3 kann dabei einen Kondensator umfassen, welcher von der Batterie Batt aufladbar sein kann. Im Falle eines Betriebsfehlers kann dann die Batterie Batt vom Stromkreis des Fahrzeugs abgekoppelt werden und die Hilfssperrklinke von der Hilfsstromquelle 3 betrieben werden. Das Fahrzeug kann die Sperrklinke SP im Normalfall über das Bordnetz BN (über W1) betreiben. Im Falle eines Betriebsfehlers kann über einer vorbestimmten Geschwindigkeit des Fahrzeugs die elektromechanische Hilfsaktuatoreinrichtung HAE über eine Rekuperation W2 aus der elektrischen Maschine EM des Fahrzeugs betreibbar sein und unterhalb der vorbestimmten Geschwindigkeit oder im Stillstand des Fahrzeugs kann die elektromechanische Hilfsaktuatoreinrichtung HAE über die Hilfsstromquelle 3 im Energiefluss W3 betreibbar sein, oder es kann auch die Sperrklinke SP selbst betätigt werden, wenn der Energiefluss W3 dazu ausreicht. Der Wandler WD kann dabei sowohl den zweiten Energiefluss W2 von der elektrischen Maschine wie auch den dritten Energiefluss W3 von der Hilfsstromquelle 3 auf ein Spannungsniveau, etwa 12V, eines ersten Energieflusses W1 regeln, welcher einem Hilfssperrklinkenbetrieb genügen kann.

Der Wandler kann gemeinsam für den Inverter (etwa für einen Notfallbetrieb) und für die Parksperreneinrichtung vorgesehen und nutzbar sein, oder es können jeweils eigene Wandler dafür vorhanden sein.

Der Wandler kann ein DC-DC Wandler sein, etwa ein bereits bekannter.

Hierbei kann eine Wandlung aus oder in Spannungen erfolgen, welche von 12 V abweichen, etwa 15 V, 18 V oder andere. Es können zusätzliche Kondensatoren vorhanden sein, etwa auf einer Niederspannungsseite eines Schaltkreises (des Inverters), welche für ein Betreiben einer Spule zu Aktuierung genutzt werden können. Eine Steuereinrichtung für die Parksperreneinrichtung kann Teil des Inverters oder einer unabhängigen (eigenen) Komponenten sein.

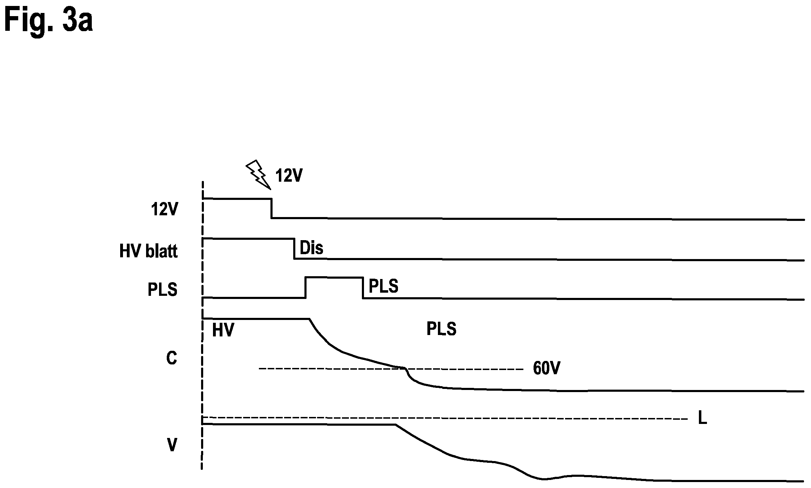

Fig. 3a zeigt ein Zeitdiagramm für einen Betriebsmodus der Parksperreneinrichtung.

Die Darstellung der Fig. 3a entspricht einem Zeitdiagramm für den Betrieb der Schaltung aus der Fig. 2. Nach einem Betriebsfehler im 12V-Bordnetz kann die Spannung des Bordnetzes im Fahrzeug ausfallen, was einer Stufenfunktion der obersten Liniendarstellung entspricht. Die Spannung von der Batterie Batt kann kurz danach abgeschaltet werden, was durch die Kurve Dis dargestellt ist. Wiederum kurz danach kann die Sperrwirkung oder Bremswirkung am Parksperrenrad aktiviert werden, was durch die Linie PLS dargestellt sein kann, wobei diese zu eine späteren Zeitpunkt wieder deaktivierbar sein kann. Die Spannung HV an dem Kondensator der Hilfsstromquelle kann mit oder nach dem Aktuieren der Sperrklinke oder der Hilfssperrklinke fallen, vorteilhaft sich der Kondensator entladen, vorteilhaft unterhalb einer Spannung von 60 V gehalten werden. Die Geschwindigkeit v kann sich dazu stets unterhalb des Grenzwertes L befinden, wenn die Sperrwirkung aktivierbar ist, und kann mit dem Einsetzen der Sperrwirkung weiter sinken. Bei Verwendung von reibbasierten Systemen, welche vorhanden sein können, kann es dabei zu einer Verzögerung beim Abbremsen kommen, wobei die Geschwindigkeit bis zum Grenzwert L erst verringert werden kann bevor eine Sperrwirkung der Klinke einsetzt. Die Hilfssperrklinke kann anstatt einer Klinke mit Sperrwirkung auch ein reibbasiertes Bremssystem oder nur ein solches umfassen.

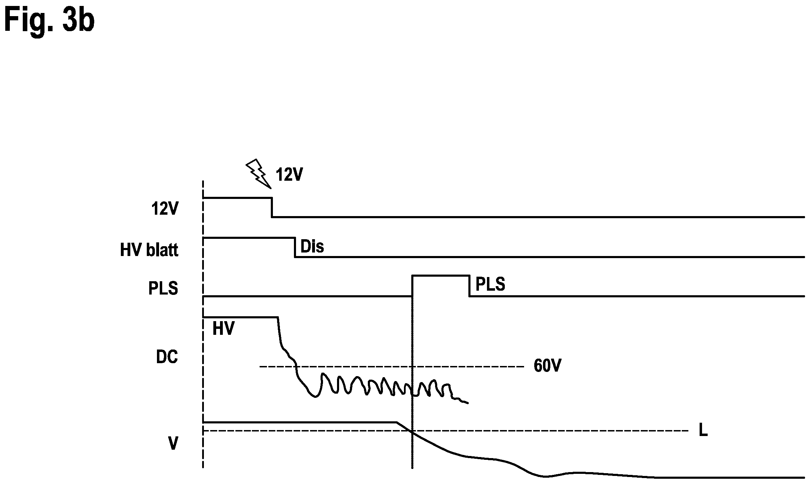

Fig. 3b zeigt ein Zeitdiagramm für einen weiteren Betriebsmodus der Parksperreneinrichtung.

Für den Fall, dass die Geschwindigkeit v zuerst über dem Grenzwert L liegt, wird die Sperrwirkung vorteilhaft nicht sofort aktiviert sondern erst nach einem Verzögern bis unterhalb des Grenzwerts L. Somit wird das Einsetzen der Sperrwirkung PLS erst vollzogen, wenn die Geschwindigkeit v den Grenzwert L unterschreitet.

Nach einem Betriebsfehler an dem Bordnetz kann eine aktive Entladung an der Hilfsstromquelle als Kondensator geführt werden um diesen unterhalb von 60 V zu halten. Um die kinetische Energie des Fahrzeugs zu nutzen, über die Maschine und den Inverter, kann dazu eine Sägezahn-Spannung zum Entladungsbetrieb erzeugt werden, was eine Hin- und Herschalten zwischen einem Freilaufmodus und einem aktiven Kurzschluss entsprechen kann. Die Fig. 3a kann eine aktive Entladung für den Kondensator darstellen und die Fig.3b eine Sägezahn-Spannung zum Entladungsbetrieb am Kondensator.

Im Übrigen entspricht der Zeitablauf dem Betrieb aus der Fig. 3a, hinsichtlich des Betriebsfehlers und dem Trennen der Batterie Batt.

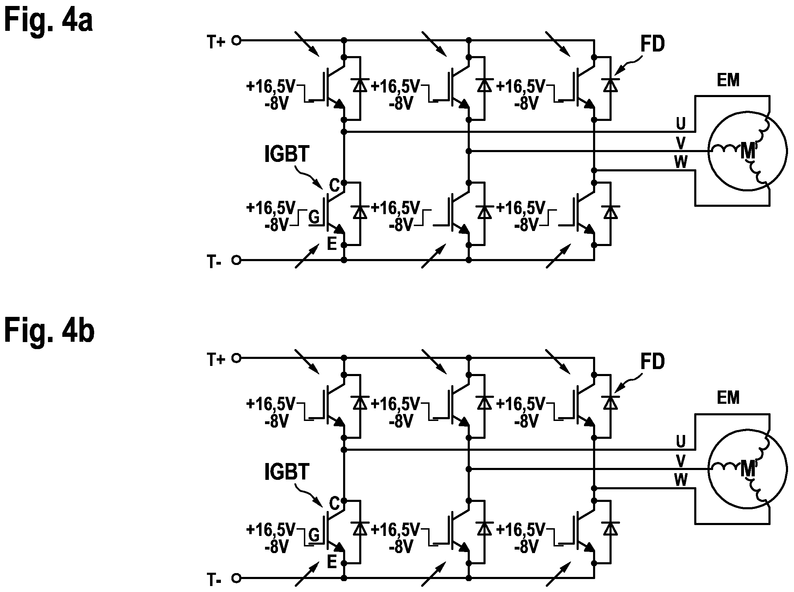

Fig. 4a zeigt ein Schaltdiagramm zum Betreiben der Parksperreneinrichtung in einem Betriebsmodus gemäß einem Ausführungsbeispiel der vorliegenden Erfindung.

Die Verschaltungsmöglichkeit (im Inverter) der Fig. 4a zeigt in der oberen Reihe drei Transistoren (IGBTs), welche nicht leitend geschaltet sind, also ausgeschaltet sind (high side). Am Ende der oberen Reihe ist eine Freilaufdiode FD verschaltet. Die UVW-Eingänge der elektrischen Maschine EM können zum Kontakt T- kurzgeschlossen sein, wobei die untere Reihe der Transistoren leitend geschaltet sein kann (jeweils jeder Transistor). Die Fig. 4a zeigt somit ein aktives Kurzschließen der unteren Transistoren (low side, Niederspannungsseite).

Die Phasen der elektrischen Maschine (UVW) sind über die untere Reihe der Transistoren mit dem T- Pol und die obere Reihe der Transistoren mit dem T+ Pol verbunden, letztere über die Freilaufdiode FD, wobei auch an der unteren Reihe eine Freilaufdiode in gleicher Weise verschaltet sein kann. Im Freilaufmodus kann die Energie von der elektrischen Maschine zum Stromnetz (T-, T+ Pol) transferiert werden, welche von der Spannung abhängen kann, die an der elektrischen Maschine erzeugt wird. Dabei kann der Inverter in einem aktiven Drehmoment-Modus sein, um die Rekuperation und den Betrieb der elektrischen Maschine zu steuern. Im Freilaufmodus kann die von der elektrischen Maschine erzeugte Spannung proportional zur Drehzahl sein. Überschreitet diese Spannung die Batteriespannung, kann ungeregelt Ladung als Funktion der Eigenschaften der elektrischen Maschine an die Batterie gegeben werden. Im Drehmomentmodus kann über das elektrische Feld Spannung und damit Ladestrom geregelt werden.

Das Prinzip der aktiven Entladung an der Niederspannungsseite (low side, untere Reihe) ist demnach in der Fig. 4a gezeigt. Der Inverter kann mit HW und SW Sicherheitsfunktionen geschützt werden. Eine davon ist das aktive Entladen (auch aktives Kurzschließen genannt). Dabei können alle drei Phasen des Elektromotors (elektrische Maschine) gemeinsam an das T+ oder an das T-Potential geschaltet werden, was ein Kurzschließen der Verbindungen zur elektrischen Maschine darstellt. Dies kann erreicht werden, indem entweder alle IGBTs an der Unterseite (Niederspannungsseite) oder alle IGBTS an der Hochspannungsseite (obere Reihe) leitbar geschaltet sein können. IGBTs sind Bipolartransistoren mit isolierter Gate-Elektrode. Ein aktives Entladen des Zwischenkreiskondensators kann über Verlustleistungserzeugung im Inverter realisiert werden. Hierzu kann die elektrische Maschine typischer Weise an den unteren IGBTs kurzgeschlossen werden, die oberen können getaktet werden. Über den sich schließenden Stromkreis können die Ströme Verluste an den Bauelementen erzeugen, der Zwischenkreis kann sich dann entladen.

Fig. 4b zeigt ein Schaltdiagramm zum Betreiben der Parksperreneinrichtung in einem Betriebsmodus gemäß einem weiteren Ausführungsbeispiel der vorliegenden Erfindung.

Die Verschaltungsmöglichkeit der Fig. 4b zeigt eine Freilaufschaltung, wobei die untere Reihe der Transistoren nicht-leitend geschaltet sein kann und die UVW-Eingänge hohen Impedanzen ausgesetzt sein können.

Abhängig von der Rotationsgeschwindigkeit der elektrischen Maschine kann eine Spannung erzeugt werden, welche die Potentialdifferenz zwischen den T- und T+ Pol übersteigen kann, was beispielsweise während der Freilaufphase (freewheeling) der Räder/Maschine erfolgen kann, was hierbei dem Dynamoprinzip entsprechen kann. Hierbei können die Freilaufdioden, die in den Inverter integriert sein können, leitend werden was zu eine unkontrollierten Stromfluss von der elektrische Maschine in das Stromnetzwerk T- /T+ führen kann (unkontrollierte Rekuperation). Daher kann der Inverter eine SW-Funktion umfassen um die Rotationsgeschwindigkeit der elektrischen Maschine zu beobachten und diese Spannung zu limitieren um einen vorbestimmten Spannungswertebereich zwischen T+ und T- zu halten.

Zum Prinzip des Freilaufs kann nach der Fig. 4b eine Verschaltung erfolgen, wonach alle IGBTs in einen nicht-leitenden Zustand geschaltet werden. Daher fließt kein Strom in den Statorwicklungen und daher kann der Rotor in beide Richtungen gedreht werden, ohne dass ein bremsendes Drehmoment entsteht.

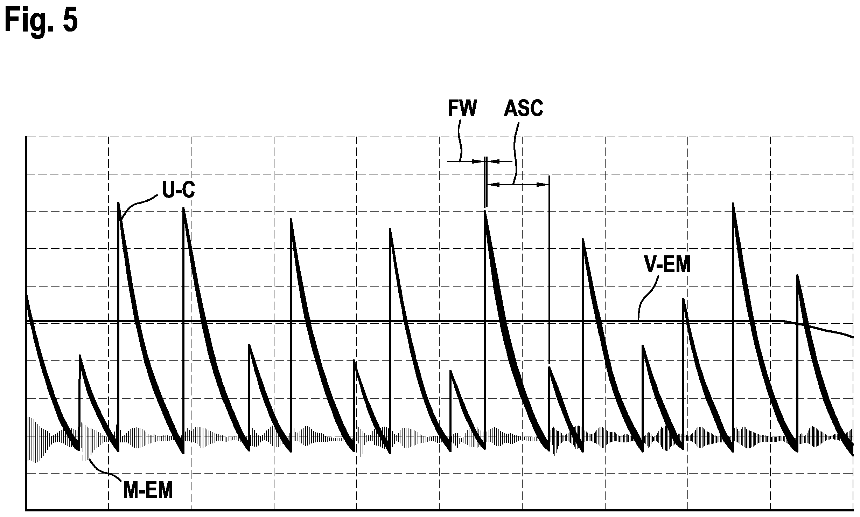

Fig. 5 zeigt eine Darstellung eines Spannungsverlaufs bei einem Betrieb einer Hilfsstromquelle in einer Parksperreneinrichtung gemäß einem Ausführungsbeispiel der vorliegenden Erfindung.

Der gezeigt Spannungsverlauf U-C an dem Kondensator über die Zeit zeigt prinzipiell einen Sägezahn-Verlauf und ist des Weiteren noch relativ zur Geschwindigkeit der Maschine V-EM (Dreh- oder Fahrgeschwindigkeit) dargestellt. Eine Freilaufphase FW kann deutlich kürzer sein als ein aktives Kurzschließen ASC, wobei letzteres unmittelbar an den Freilauf FW anschließen kann. Zusätzlich ist zum Vergleich noch das Drehmomentverhalten der Maschine M-EM gezeigt, dabei ist ein verstärkter Ausschlag des Wertes des Drehmoments unmittelbar nach der Freilaufphase FW erkennbar.

Wird die elektrische Maschine getrieben, wenn der Inverter ausgeschaltet ist, (T15 und/oder T30, dabei handelt es sich beispielsweise um eine Bezeichnung "Terminal 15" oder "Klemme15", was ein geschaltetes Plus vom Zündstartschalter einer Zündschaltung und den Status "Zündung ein" geben kann; beim "Terminal 30" oder "Klemme 30" kann es sich um ein Batterie-Plus, also ein Plus direkt von der Batterie handeln) und wenn die Batterie (HV) dabei von der Verbindung mit der elektrischen Maschine getrennt ist, so kann eine äußerst hohe Spannung im HV-system (Stromversorgung) durch Induktion durch die elektrische Maschine entstehen. Daher kann bei einer induzierten Spannung, etwa von mehr als 38 V, ein ASC-Kondensator (an der Niederspannungsseite) aktiviert werden oder verschaltet werden. Hierbei ist mit ASC (active short circuit) die Komponente zum aktiven Entladen gemeint.

Solange der Inverter in der Freilaufphase betrieben wird (hierbei sind alle Leistungshalbleiter ausgeschaltet), kann der Kondensator (Hilfsstromquelle) mit einem Strom durch Dioden geladen werden, welcher in dem 3-Phasen-System (der elektrischen Maschine) erzeugt wird.

Das aktive Entladen kann aktiviert werden wenn die Spannung am Kondensator 38 V übersteigt (dies kann einem Nominalwert einer unteren Hysterese zu deren Einschaltgrenzwert entsprechen, was von einer Temperatur abhängen kann) um eine Spannung am Kondensator unterhalb von 60 V zu halten.

Während der aktiven Entladung wird der Kondensator nicht geladen und die Spannung am Kondensator verringert sich bis zum Grenzwert zum Ausschalten der Leistungshalbleiter auf 38 V, was den Freilauf aktivieren kann. Dieser Prozess kann wiederholt werden bis die elektrische Maschine rotiert und eine induzierte Spannung (oder Geschwindigkeit der Maschine/Fahrzeug) ausreichend hoch ist, dabei kann als ausreichend beispielsweise eine Schwelle von 38 V verstanden werden, sodass die induzierte Spannung dann 38 V oder größer sein kann.

Während dem Entladen (ASC) können Verluste im Inverter auftreten und dieser kann sich zunehmend erhitzen. Ein Rotieren der Maschine ist dabei nicht ratsam wenn der Inverter und ein Kühlkreislauf deaktiviert sind.

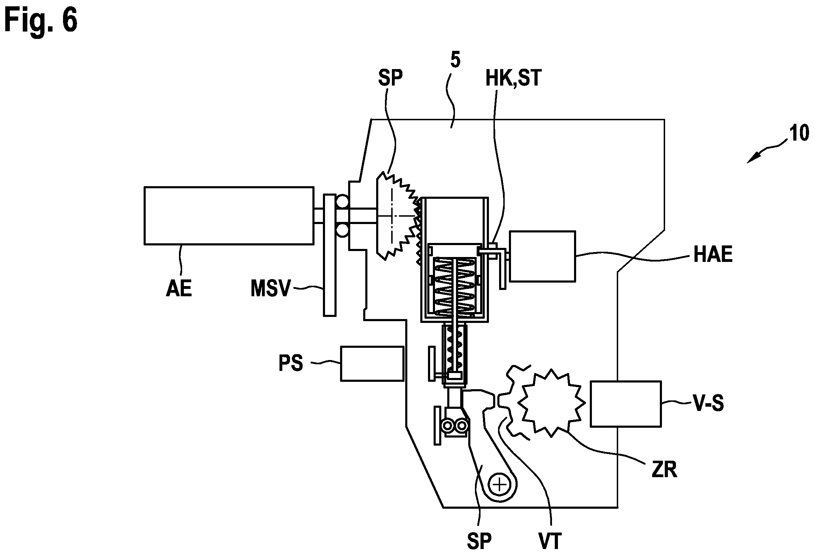

Fig. 6 zeigt eine Darstellung einer Hilfssperrklinke in einer Parksperreneinrichtung gemäß einem Ausführungsbeispiel der vorliegenden Erfindung.

Die Darstellung der Fig. 6 entspricht nur einem möglichen Beispiel der anwendbaren Mechanik. Hierbei kann optional auch ein Geschwindigkeitssensor in der Parksperreneinrichtung umfasst sein, um ein Aktivieren der Sperrklinke nur unterhalb einer vorbestimmten Geschwindigkeit zu gewährleisten. Dies kann optional sein, da die Geschwindigkeit vom Betrieb der elektrischen Maschine/Fahrzeug und deren etwaiger Geschwindigkeitssensoren ermittelbar sein kann. Ein Parksperrenrad kann Vertiefungen VT umfassen, in welche die Sperrklinke einrastbar ist. Dabei kann das Parksperrenrad mit einem Zahnrad ZR verbunden sein, über dessen Drehung ein Geschwindigkeitssensor V-S auf eine Geschwindigkeit des Parksperrenrads rückschließen kann. Dabei kann angenommen werden, dass das Parksperrenrad mit einem Antriebsrad des Fahrzeugs verbunden sein kann und die Drehung des Antriebsrads einen Rückschluss auf die Geschwindigkeit des Fahrzeugs zulassen kann. Die Parksperreneinrichtung kann einen Positionssensor PS umfassen, mit welcher eine Stellung der Antriebsmechanik der Sperrklinke SP überwacht werden kann, wobei eine Position eines Permanentmagneten überwacht werden kann (der Permanentmagnet kann dem Positionssensor gegenüberliegen) und wenn dieser an einer bestimmten Stelle der bewegbaren Antriebsmechanik der Sperrklinke SP angeordnet ist, dann darauf rückgeschlossen werden kann, ob die Sperrklinke durch die Antriebsmechanik in die Vertiefung einrastet oder nicht. Die Aktuatoreinrichtung AE kann dabei die Antriebsmechanik der Sperrklinke SP bewegen, wobei die Hilfssperrklinke HK durch eine Hilfsaktuatoreinrichtung HAE, welche eine elektrisierbare Spule umfassen kann, einen Stift umfassen kann, der in die Antriebsmechanik einführbar sein kann, wenn eine offene oder sperrende Wirkung der Sperrklinke eingenommen wird. Die Antriebsmechanik der Sperrklinke kann eine Feder umfassen, wobei bei einer Entspannung der Feder die Sperrklinke in die Vertiefung gedrückt werden kann. Dabei kann der Stift der Hilfssperrklinke derart einrasten, dass die Feder in der entspannten Lage gehalten werden kann. Alternativ dazu kann der Stift auch die Feder in einer gespannten Lage fixieren und wenn die Hilfsaktuatoreinrichtung HAE dann den Stift löst kann die Feder dann die Sperrklinke einlegen.

Die Parksperreneinrichtung kann eine manuelle Sperrlösevorrichtung MSV umfassen, wobei ein Hebel dieser die Position der Aktuatoreinrichtung zurückschieben kann, so dass die Antriebsmechanik in eine Position zurückgeschoben werden kann, in welcher die Sperrklinke sich außerhalb der Sperrwirkung (Vertiefung) befinden kann.

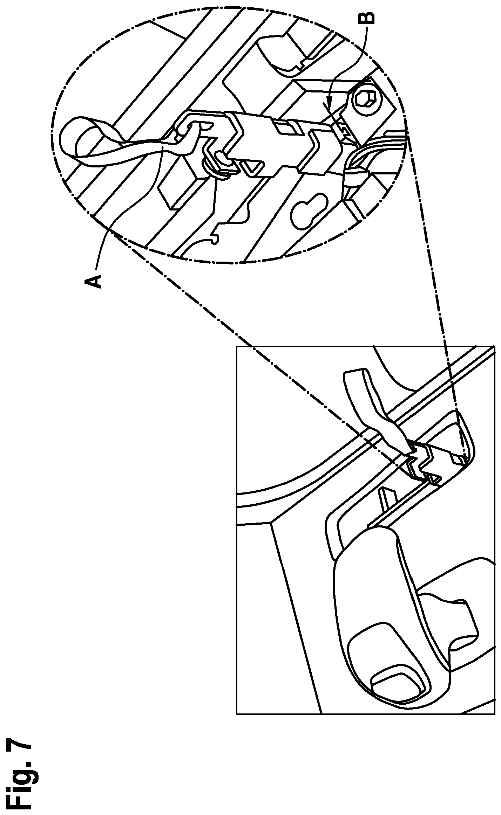

Fig. 7 zeigt eine Darstellung einer manuellen Sperrlösevorrichtung in einer Parksperreneinrichtung gemäß einem Ausführungsbeispiel der vorliegenden Erfindung.

In der Fig. 7 wird eine manuelle Sperrlösevorrichtung gezeigt, wie diese etwa in der Parksperreneinrichtung der Fig. 6 anwendbar ist. Dabei kann ein Kabel A gezogen werden und dadurch ein Hebel B nach oben gezogen werden, wodurch sich dann die Antriebsmechanik mit der Federeinrichtung der Fig. 6 in eine Lage bewegen kann, in welcher die Sperrklinke nicht mehr in die Vertiefung einrastet. Dabei kann auch die Hilfssperrklinke aus der Sperrposition herausgezogen werden.

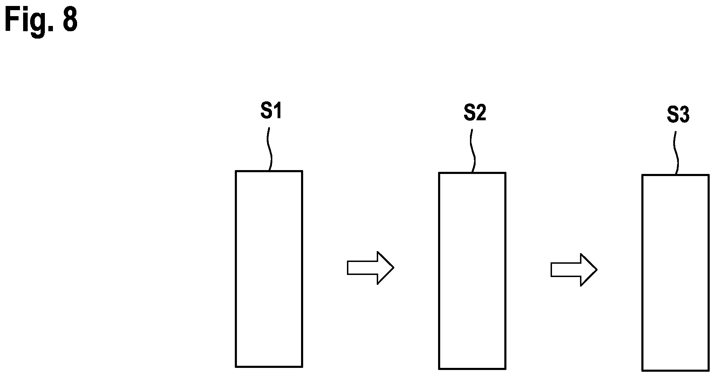

Fig. 8 zeigt eine Blockdarstellung von Verfahrensschritten des Verfahrens zum Betreiben einer Parksperreneinrichtung gemäß einem Ausführungsbeispiel der vorliegenden Erfindung.

Bei dem Verfahren zum Betreiben einer Parksperreneinrichtung in einem Fahrzeug erfolgt ein Bereitstellen S1 einer erfindungsgemäßen Parksperreneinrichtung in dem Fahrzeug, ein Erkennen S2 eines Betriebsfehlers in einer Stromversorgung des Fahrzeugs oder eines Bordnetzes des Fahrzeugs;
ein Einlegen S3 einer Sperrwirkung an einer Hilfssperrklinke und/oder an einer Sperrklinke mit der elektromechanischen Hilfsaktuatoreinrichtung, wobei die elektromechanischen Hilfsaktuatoreinrichtung mit einer Hilfsstromquelle im Falle des Betriebsfehlers betrieben wird,
wobei über einer vorbestimmten Geschwindigkeit des Fahrzeugs die elektromechanische Hilfsaktuatoreinrichtung über eine Rekuperation aus einer elektromechanischen Maschine des Fahrzeugs betrieben wird und unterhalb der vorbestimmten Geschwindigkeit die elektromechanische Hilfsaktuatoreinrichtung über die Hifsstromquelle betrieben wird.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar, wobei die vorliegende Erfindung durch die nachfolgenden Ansprüche definiert wird.

## Patentansprüche

1. Parksperreneinrichtung (10) für ein Fahrzeug (F), umfassend:
- eine Sperrklinke (SP);
- ein Parksperrenrad (1) mit zumindest einer Vertiefung (VT), in welche die Sperrklinke (SP) einrastbar ist und dabei eine Sperrwirkung erzeugbar ist;
- eine Aktuatoreinrichtung (AE), mit welcher die Sperrklinke (SP) aktuierbar ist und in die Vertiefung (VT) hinein und/oder aus dieser heraus bewegbar ist;
- eine Steuereinrichtung (SE), mit welcher ein Aktuieren der Sperrklinke (SP) mit der Aktuatoreinrichtung (AE) steuerbar ist;
- eine elektromechanische Hilfsaktuatoreinrichtung (HAE), mit welcher entweder
die Sperrklinke (SP) aktuierbar ist und in die Vertiefung (VT) hinein und/oder aus dieser heraus bewegbar ist, wobei mit der Steuereinrichtung (SE) ein Aktuieren der Sperrklinke mit der elektromechanischen Hilfsaktuatoreinrichtung (HAE) im Falle eines Betriebsfehlers in einer Stromversorgung des Fahrzeugs oder eines Bordnetzes des Fahrzeugs steuerbar ist; oder eine Hilfssperrklinke (HK) aktuierbar ist und in die Vertiefung (VT) hinein und/oder aus dieser heraus bewegbar ist, wobei mit der Steuereinrichtung (SE) ein Aktuieren der Hilfssperrklinke mit der elektromechanischen Hilfsaktuatoreinrichtung (HAE) im Falle eines Betriebsfehlers in einer Stromversorgung des Fahrzeugs oder eines Bordnetzes des Fahrzeugs steuerbar ist;
- und eine Hilfsstromquelle (3) mit welcher die elektromechanische Hilfsaktuatoreinrichtung (HAE) im Falle des Betriebsfehlers in der Stromversorgung des Fahrzeugs oder des Bordnetzes des Fahrzeugs betreibbar ist,
- wobei die Parksperreneinrichtung (10) so konfiguriert ist, dass über einer vorbestimmten Geschwindigkeit des Fahrzeugs die elektromechanische Hilfsaktuatoreinrichtung (HAE) über eine Rekuperation aus einer elektrischen Maschine des Fahrzeugs betreibbar ist und unterhalb der vorbestimmten Geschwindigkeit die elektromechanische Hilfsaktuatoreinrichtung (HAE) über die Hilfsstromquelle (3) betreibbar ist.

2. Parksperreneinrichtung (10) nach Anspruch 1, bei welcher über einer vorbestimmten Geschwindigkeit des Fahrzeugs die elektromechanische Hilfsaktuatoreinrichtung (HAE) über eine Rekuperation aus einer elektrischen Maschine des Fahrzeugs betreibbar ist und dabei die Sperrklinke oder die Hilfssperrklinke erst dann in die Vertiefung bewegbar ist, wenn die Geschwindigkeit des Fahrzeugs unterhalb eine vorbestimmte Grenzgeschwindigkeit fällt und dabei eine Betriebsspannung der Hilfsstromquelle (3) unterhalb einer vorbestimmten Grenzspannung regelbar ist.

3. Parksperreneinrichtung (10) nach Anspruch 2, bei welcher die Hilfsstromquelle (3) einen Kondensator umfasst, und die Steuereinrichtung dazu eingerichtet ist, eine Entladung des Kondensators unterhalb der vorbestimmten Grenzspannung zu erzwingen.

4. Parksperreneinrichtung (10) nach einem der Ansprüche 1 bis 2, bei welcher die Hilfsstromquelle (3) einen Kondensator umfasst.

5. Parksperreneinrichtung (10) nach einem der Ansprüche 1 bis 4, welche eine manuelle Sperrlösevorrichtung umfasst, mittels welcher die Sperrklinke (SP) oder die Hilfssperrklinke (HK) manuell aus der Vertiefung herausbewegbar sind.

6. Fahrzeug mit einer Parksperreneinrichtung (10) nach einem der Ansprüche 1 bis 5, bei welcher das Parksperrenrad (1) mit einer Antriebswelle eines Motors des Fahrzeugs verbunden ist.

7. Fahrzeug mit einer Parksperreneinrichtung (10) nach Anspruch 6, bei welcher der Motor eine elektrische Maschine (EM) mit einem Rotor umfasst und die Antriebswelle mit dem Rotor verbunden ist.

8. Verfahren zum Betreiben einer Parksperreneinrichtung (10) in einem Fahrzeug (F), umfassend die Schritte:
- Bereitstellen (S1) einer Parksperreneinrichtung (10) nach einem der Ansprüche 1 bis 5 in dem Fahrzeug (F);
- Erkennen (S2) eines Betriebsfehlers in einer Stromversorgung des Fahrzeugs oder eines Bordnetzes des Fahrzeugs;
- Einlegen (S3) der Sperrwirkung an der Hilfssperrklinke (HK) oder an der Sperrklinke mit der elektromechanischen Hilfsaktuatoreinrichtung (HAE), wobei die elektromechanischen Hilfsaktuatoreinrichtung (HAE) mit einer Hilfsstromquelle (3) im Falle des Betriebsfehlers betrieben wird,
wobei über einer vorbestimmten Geschwindigkeit des Fahrzeugs die elektromechanische Hilfsaktuatoreinrichtung (HAE) über eine Rekuperation aus einer elektrischen Maschine des Fahrzeugs betrieben wird und unterhalb der vorbestimmten Geschwindigkeit die elektromechanische Hilfsaktuatoreinrichtung (HAE) über die Hilfsstromquelle (3) betrieben wird.

## Claims

1. Parking lock device (10) for a vehicle (F), comprising:
- a locking pawl (SP);
- a parking lock wheel (1) having at least one recess (VT) into which the locking pawl (SP) can be latched and a locking effect can be produced in the process;
- an actuator device (AE) with which the locking pawl (SP) can be actuated and moved into and/or out of the recess (VT);
- a control device (SE) with which actuation of the locking pawl (SP) with the actuator device (AE) can be controlled;
- an electromechanical auxiliary actuator device (HAE) with which either the locking pawl (SP) can be actuated and moved into and/or out of the recess (VT), wherein actuation of the locking pawl with the electromechanical auxiliary actuator device (HAE) can be controlled with the control device (SE) in the event of an operating fault in a power supply of the vehicle or an on-board electrical system of the vehicle;
or an auxiliary locking pawl (HK) can be actuated and moved into and/or out of the recess (VT), wherein actuation of the auxiliary locking pawl with the electromechanical auxiliary actuator device (HAE) can be controlled with the control device (SE) in the event of an operating fault in a power supply of the vehicle or an on-board electrical system of the vehicle;
- and an auxiliary power source (3) with which the electromechanical auxiliary actuator device (HAE) can be operated in the event of the operating fault in the power supply of the vehicle or the on-board electrical system of the vehicle,
- wherein the parking lock device (10) is configured such that the electromechanical auxiliary actuator device (HAE) can be operated by means of recuperation from an electric machine of the vehicle above a predetermined speed of the vehicle and the electromechanical auxiliary actuator device (HAE) can be operated by means of the auxiliary power source (3) below the predetermined speed.

2. Parking lock device (10) according to Claim 1, in which the electromechanical auxiliary actuator device (HAE) can be operated by means of recuperation from an electric machine of the vehicle above a predetermined speed of the vehicle and in the process the locking pawl or the auxiliary locking pawl can be moved into the recess only when the speed of the vehicle falls below a predetermined limit speed and in the process an operating voltage of the auxiliary power source (3) can be adjusted below a predetermined limit voltage.

3. Parking lock device (10) according to Claim 2, in which the auxiliary power source (3) comprises a capacitor, and the control device is designed to force discharge of the capacitor below the predetermined limit voltage.

4. Parking lock device (10) according to either of Claims 1 and 2, in which the auxiliary power source (3) comprises a capacitor.

5. Parking lock device (10) according to any of Claims 1 to 4, which comprises a manual locking release device, by means of which the locking pawl (SP) or the auxiliary locking pawl (HK) can be manually moved out of the recess.

6. Vehicle having a parking lock device (10) according to any of Claims 1 to 5, in which the parking lock wheel (1) is connected to a drive shaft of a motor of the vehicle.

7. Vehicle having a parking lock device (10) according to Claim 6, in which the motor comprises an electric machine (EM) having a rotor and the drive shaft is connected to the rotor.

8. Method for operating a parking lock device (10) in a vehicle (F), comprising the steps of:
- providing (S1) a parking locking device (10) according to any of Claims 1 to 5 in the vehicle (F);
- identifying (S2) an operating fault in a power supply of the vehicle or an on-board electrical system of the vehicle;
- applying (S3) the locking effect at the auxiliary locking pawl (HK) or at the locking pawl with the electromechanical auxiliary actuator device (HAE), wherein the electromechanical auxiliary actuator device (HAE) is operated with an auxiliary power source (3) in the event of the operating fault, wherein the electromechanical auxiliary actuator device (HAE) is operated via recuperation from an electric machine of the vehicle above a predetermined speed of the vehicle and the electromechanical auxiliary actuator device (HAE) is operated via the auxiliary power source (3) below the predetermined speed.

## Revendications

1. Système de frein de stationnement (10) pour un véhicule (F), comprenant :
- un cliquet d'arrêt (SP) ;
- une roue (1) de frein de stationnement avec au moins un creux (VT) dans le-quelle cliquet d'arrêt (SP) peut être encliqueté et, de ce fait, produire un effet de blocage ;
- un système d'actionnement (AE) avec lequel le cliquet d'arrêt (SP) peut être actionné et déplacé dans et/ou hors du creux (VT) ;
- un système de commande (SE), avec lequel un actionnement du cliquet d'arrêt (SP) peut être commandé avec le système d'actionnement (AE) ;
- un système d'actionnement auxiliaire électromécanique (HAE), avec lequel soit
le cliquet d'arrêt (SP) peut être actionné et déplacé dans et/ou hors du creux (VT), le système de commande (SE) permettant de commander l'actionnement du cliquet d'arrêt avec le système d'actionnement auxiliaire électromécanique (HAE) en cas de dysfonctionnement d'une alimentation en courant du véhicule ou d'un réseau de bord du véhicule ;
soit un cliquet d'arrêt auxiliaire (HK) peut être actionné et déplacé dans et/ou hors du creux (VT), le système de commande (SE) permettant de commander un actionnement du cliquet d'arrêt auxiliaire avec le système d'actionnement auxiliaire électromécanique (HAE) en cas de dysfonctionnement d'une alimentation en courant du véhicule ou d'un réseau électrique de bord du véhicule ;
- et une source de courant auxiliaire (3), avec laquelle le système d'actionnement auxiliaire électromécanique (HAE) peut fonctionner en cas de dysfonctionnement de l'alimentation en courant du véhicule ou du réseau de bord du véhicule,
- le système de frein de stationnement (10) étant configuré de telle sorte que, au-dessus d'une vitesse prédéfinie du véhicule, le système d'actionnement auxiliaire électromécanique (HAE) peut fonctionner par une récupération d'une machine électrique du véhicule et, au-dessous de la vitesse prédéfinie, le système d'actionnement auxiliaire électromécanique (HAE) peut fonctionner par la source de courant auxiliaire (3).

2. Système de frein de stationnement (10) selon la revendication 1, dans lequel, au-dessus d'une vitesse prédéfinie du véhicule, le système d'actionnement auxiliaire électromécanique (HAE) peut fonctionner par une récupération d'une machine électrique du véhicule et, dans ce cas, le cliquet d'arrêt ou le cliquet d'arrêt auxiliaire ne peut être déplacé dans le creux que lorsque la vitesse du véhicule tombe en dessous d'une vitesse limite prédéfinie, une tension de fonctionnement de la source de courant auxiliaire (3) pouvant dans ce cas être régulée en dessous d'une tension limite prédéfinie.

3. Système de frein de stationnement (10) selon la revendication 2, dans lequel la source de courant auxiliaire (3) comprend un condensateur, et le système de commande est mis au point pour forcer une décharge du condensateur en dessous de la tension limite prédéfinie.

4. Système de frein de stationnement (10) selon l'une des revendications 1 à 2, dans lequel la source de courant auxiliaire (3) comprend un condensateur.

5. Système de frein de stationnement (10) selon l'une des revendications 1 à 4, lequel comprend un dispositif de déblocage manuel au moyen duquel le cliquet d'arrêt (SP) ou le cliquet d'arrêt auxiliaire (HK) peut être sorti manuellement du creux.

6. Véhicule avec un système de frein de stationnement (10) selon l'une des revendications 1 à 5, dans lequel la roue (1) de frein de stationnement est reliée à un arbre d'entraînement d'un moteur du véhicule.

7. Véhicule avec un système de frein de stationnement (10) selon la revendication 6, dans lequel le moteur comprend une machine électrique (EM) avec un rotor et l'arbre d'entraînement est relié au rotor.

8. Procédé pour faire fonctionner un système de frein de stationnement (10) dans un véhicule (F), comprenant les étapes :
- mise à disposition (S1) d'un système de frein de stationnement (10) selon l'une des revendications 1 à 5 dans le véhicule (F) ;
- identification (S2) d'un dysfonctionnement dans une alimentation en courant du véhicule ou d'un réseau de bord du véhicule ;
- enclenchement (S3) de l'effet de blocage sur le cliquet d'arrêt auxiliaire (HK) ou sur le cliquet d'arrêt avec le système d'actionnement auxiliaire électromécanique (HAE), le système d'actionnement auxiliaire électromécanique (HAE) fonctionnant avec une source de courant auxiliaire (3) en cas de dysfonctionnement,
le système d'actionnement auxiliaire électromécanique (HAE) fonctionnant, au-dessus d'une vitesse prédéfinie du véhicule, par une récupération d'une machine électrique du véhicule et le système d'actionnement auxiliaire électromécanique (HAE) fonctionnant, au-dessous de la vitesse prédéfinie, par la source de courant auxiliaire (3).
